# EUROPEAN PATENT APPLICATION

(11) **EP 4 037 363 A1**
(43) Date of publication of application: **03.08.2022**
(21) Application number: 22163165.8
(22) Date of filing: 22.12.2017
(51) Int. Cl.: H04W 16/10, H04W 16/04, H04W 24/10, H04W 84/12

(54) **A METHOD FOR IDENTIFYING AT LEAST A WIRELESS LINK CAUSING INTERFERENCES ON OTHER WIRELESS LINKS**

(62) Divisional of application: 17306925.3
(71) Applicant: AirTies Belgium SPRL, 1200 Woluwe-Saint-Lambert (BE)
(72) Inventor: VAN HERWEGEN, Michiel, 2650 EDEGEM (BE); VAN DOORSELAER, Karel, 2650 EDEGEM (BE); GODMAN, Nick, 2650 EDEGEM (BE)
(74) Representative: Plasseraud IP

(57) **Abstract**

The present disclosure relates to a computer implemented method for identifying, among a set of wireless links established between at least two wireless end-points, at least a first wireless link causing interferences on at least a second wireless link belonging to said set of wireless links, said method comprising:
- Generating at least a set of data enabling the identification of the first wireless link by allocating measurements of an amount of performance loss of a wireless link due to interferences, and measurements of a use of a wireless medium by either said first wireless link or said second wireless link, to a given time interval of a set of time intervals in a weighted manner based on a time overlap between a time interval during which said measurements are performed and at least a given time interval of said set of time intervals,
- identifying, based on said at least set of data, at least said first wireless link within said set of wireless links.

## Description

### TECHNICAL FIELD

The present invention relates to wireless local area networks (WLANs) and more particularly to the identification of a t least one wireless link within a WLAN causing interference on other wireless links used by WLANs for exchanging data.

Typically, a WLAN consists of set of stations and one or more access points that establish wireless links between each other.

### BACKGROUND

Gateways are widely used to connect devices located in a home to the Internet or any other wide area network (WAN). Gateways use for example Digital Subscriber Line (DSL) technology that enables a high data rate transmission over copper lines or optical lines. Gateways, but also other devices such as routers, switches, telephones and set-top boxes, are understood in this context as Customer Premises Equipment (CPE) devices.

Gateways including wireless technology have a key role in today's home and professional environments. A mechanism for connecting wireless devices to a Local Area Network (LAN) is called Wi-Fi, which is a brand name of the Wi-Fi Alliance for devices using the IEEE 802.11 family of standards for wireless data transmission. The IEEE 802.11 standards define two types of wireless nodes, a general wireless device that can connect to other devices called a station and a special type of station that is in control of the network, namely an access point. A Wi-Fi network, often called a WLAN (Wireless Local Area Network), consists of one or more access points embedded in a gateway connected to one or several stations. Of course, gateways may use other mechanisms for connecting wireless devices to a Local Area Network (LAN).

Due to its flexible and "invisible" nature, a lot of local area network devices are utilizing Wi-Fi rather than the classical wired Ethernet approach. This widespread usage of wireless local area network has exposed however a serious downside of using a shared medium technology : interference. Interference, both Wi-Fi and non-Wi-Fi related, leads to a degraded user experience due to the nature of IEEE 802.11.

An important aspect when configuring a wireless local area network, is the allocation of a frequency channel to a given access point. Auto Channel Selection (ACS) algorithms allow the access points to scan the various frequency channels available and select a frequency channel based on several parameters such as background noise, communication medium business, the number of neighboring access points based on beacon messages received from other access points as well as the Received Signal Strength Indication (RSSI) with which these beacon messages are received, etc.

In environments such as buildings in which access points are densely deployed, those access points influence each other, in particular, by causing interference to one another or by sharing the wireless medium. In order to provide a frequency channel allocation scheme in such densely populated environments information gathered by the access points are collected in a centralized manner so as to coordinate the frequency channel allocation between the different access points. That information is for example, for a given access point, a list of neighboring access points, the frequency channel allocated to those neighboring access points as well as the respective RSSI, etc.

In case an access point has less neighboring access points than the number of available frequency channels, a straightforward solution consists in allocating non-overlapping frequency channels to each of the neighboring access points. Such a solution cannot be implemented in densely populated environments where an access point has more neighboring access points than the number of available frequency channels.

In such a situation, relying on a list of neighboring access points, background noise, communication medium business, the beacon messages received from neighboring access points as well as the Received Signal Strength Indication (RSSI) with which these beacon messages are received, etc. may lead to a frequency channel allocation scheme that may not significantly reduce the interference between access points because the correlation between interference and the above-mentioned parameters is not well known and/or deterministic.

The present invention has been devised with the foregoing in mind.

### SUMMARY OF INVENTION

According to a first aspect of the invention there is provided a computer implemented method for identifying, among a set of wireless links established between at least two wireless end-points, at least a first wireless link causing interferences on at least a second wireless link belonging to said set of wireless links, said method comprising:
- Generating at least a set of data enabling the identification of the first wireless link by allocating measurements of an amount of performance loss of a wireless link due to interferences, and measurements of a use of a wireless medium by either said first wireless link or said second wireless link, to a given time interval of a set of time intervals in a weighted manner based on a time overlap between a time interval during which said measurements are performed and at least a given time interval of said set of time intervals,
   identifying, based on said at least set of data, at least said first wireless link within said set of wireless links.

Such a method according to an embodiment of the invention enables the identification of at least one wireless link causing interferences on other wireless links. The wireless link causing the interferences is referred to as a bad neighbor. A wireless link is established between two wireless end-point devices. A wireless link may use a plurality of frequency channels for transmitting data to and from the stations, but only one at the time.

The interference may be performance loss due to the sharing of the wireless medium between a plurality of wireless links, Near End Inference, Far End Interference or a combination of those.

The method according to an embodiment of the invention relies on the use of a first metric representing the hinderance experienced by a wireless link and of a second metric representing the usage of the communication medium by wireless links located in the vicinity of each other.

The first metric is for example a value representing an amount of performance lost due the interference relatively to a maximum performance of the wireless link under consideration.

The second metric is the wireless medium usage because the more time the medium is used simultaneously by the wireless link suffering the interference and the bad neighbor, the more interference are generated.

In an embodiment of the invention, only the wireless links potentially suffering interference is reporting the first metric and only wireless links potentially behaving as bad neighbors report the second metric.

In another embodiment of the invention, all the wireless links of a set of wireless links report the first and the second metric.

Each wireless link reports the first and the second metrics at different moment in time. In order to make all the measurements reported by the different wireless links exploitable, these measurements are allocated to different, across-end-point-consistent i.e. the same time intervals are created for all end-points so that the time intervals created for every end-point start and end at the same moments in time, time intervals depending on the schedule of the measurement relatively to said time intervals. If a measurement can be allocated to two different time intervals, the measurement is allocated to the two time intervals in a weighted manner based on a time overlap between the schedule of the measurements and at the time intervals.

According to an embodiment of the invention, a sum of the weights associated to measurements allocated to a given time interval is greater than or equal to a threshold.

A minimum value for the sum of the weights associated to measurements allocated to a given time interval prevents slivers of data to represent a whole time interval. If the value of the sum of the weights associated to measurements allocated to a given time interval is below the minimum value, then the time interval is not considered for the identification of the wireless link causing the interference.

According to an embodiment of the invention, identifying the at least first wireless link based on the set of data comprises:
- Splitting the data set into a training set and a test set,
- Training a first performance analysis by running a least square regression on the metrics of a wireless medium usage of the train set, the performance being measured by calculating a R-Squared metrics on the train set while predicting a performance for the test set,
- For at least one metric of a wireless medium usage performing a second performance analysis by training a least square regression on the metrics of a wireless medium usage of the train set minus the considered metric of a wireless medium usage, the performance being measured by calculating a R-Squared metrics on the test set minus the considered metric of a wireless medium usage while predicting a performance for the test set,

Determining a score for at least one wireless link belonging to said set of wireless links by substracting the value of the R-Squared metrics obtained on the test set minus the considered metric of a wireless medium usage from the value of the R-Squared metrics obtained on the test set, the higher the score of a wireless link the more hindering the interference caused by said wireless link on the other wireless link.

According to an embodiment of the invention, prior to perform the first performance analysis, a LASSO regression is performed on said train set.

This implementation has two benefits. Firstly, it allows non-penalized coefficients while delivering a sparse solution. Secondly, using least square regression it is possible to control which input is left out, allowing to check how indispensable the input truly is.

In order to identify a wireless link as causing interference on a given frequency channel two criteria are confirmed.

The identification of at least a wireless link causing interference on at least another wireless link may be a high-dimensional problem since in dense neighborhoods, there might be hundreds of wireless links used for exchanging data. In order to deal with this high-dimension issue, a LASSO (Least Absolute Shrinkage and Selection Operator)) regression is performed on the train set.

LASSO is a regression analysis method that performs both variable selection and regularization in order to enhance the prediction accuracy and interpretability of the statistical model it produces.

LASSO regression was introduced in order to improve the prediction accuracy and interpretability of regression models by altering the model fitting process to select only a subset of the provided covariates for use in the final model rather than using all of them.

LASSO regression consists in forcing the sum of the absolute value of the regression coefficients to be less than a fixed value, which forces certain coefficients to be set to zero, effectively choosing a simpler model that does not include those coefficients.

LASSO regression is performed on the train set as followed: the value to predict is the interference, the input used for the prediction are the metrics of the wireless medium usage belonging to the train set.

Another object of the invention is a device capable of identifying, among a set of wireless links, at least a first wireless link causing interferences on at least a second wireless link belonging to said set of wireless links, said device comprising at least a hardware processor configured to:
- generate at least a set of data enabling the identification of the first wireless link by allocating measurements of an amount of performance loss of a wireless link due to interferences, and measurements of a use of wireless medium by either said first wireless link or said second wireless link, to a given time interval of a set of time intervals in a weighted manner based on a time overlap between a time interval during which said measurements are performed and at least a given time interval of said set of time intervals,
- identify, based on said at least set of data, at least said first wireless link within said set of wireless links.

According to an embodiment of the invention, said hardware processor is further configured to:
- Split the data set into a training set and a test set,
- Perform a first performance analysis by training a least square regression on the metrics of a wireless medium usage of the train set, the performance being measured by calculating a R-Squared metrics on the test set while predicting a performance for the test set,
- For at least one metric of a wireless medium usage, perform a second performance analysis by training a least square regression on the metrics of a wireless medium usage of the train set minus the considered metric of a wireless medium usage, the performance being measured by calculating a R-Squared metrics on the test set minus the considered metric of a wireless medium usage while predicting a performance for the test set,
- Determine a score for at least one wireless link belong to said set of wireless links by substracting the value of the R-Squared metrics obtained on the test set minus the considered metric of a wireless medium usage from the value of the R-Squared metrics obtained on the test set, the higher the score of a wireless link the more hindering the interference caused by said wireless link on the frequency channel.

According to an embodiment of the invention, prior to perform the first performance analysis, the hardware processor is configured to perform a LASSO regression on said train set.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
**Figure 1** represents a system S comprising a plurality of wireless end-points located for example in a same building B,
**Figure 2** represents a more detailed view of one of the end-points according to an embodiment of the invention,
**Figure 3** is a schematic block diagram illustrating an example of a communication device according to an embodiment of the invention,
**Figure 4** is a flow chart for explaining a process for identifying among the wireless links which one is causing interference on another wireless link according to an embodiment of the invention.

### DETAILED DESCRIPTION

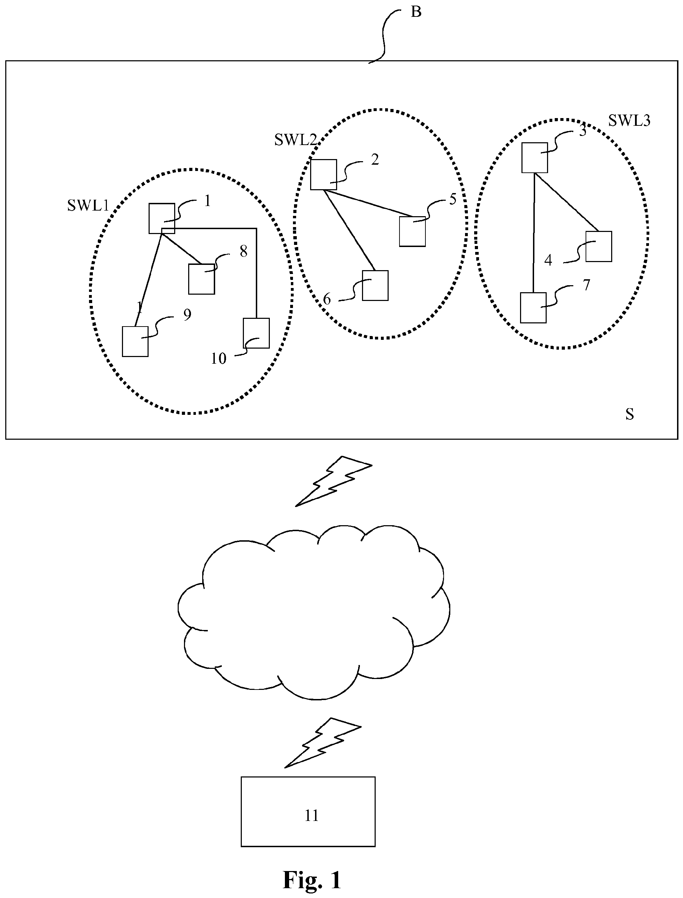

The elements shown in **figure 1** may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its spirit and scope.

A CPE device includes, but is not limited to, for example a controller, e.g. a microprocessor, a memory, in which an operating system is stored for the operation of the CPE device, a wireless node for a wireless communication, and a circuit for a broadband connection, e.g. an xDSL connection. The wireless node includes, but is not limited to, a software driver, a physical layer with data buffers, and an antenna. A CPE device of this kind is for example an access gateway.

The wireless node is controlled by the software driver which executes a number of background tasks during operation of the wireless node, e.g. dynamic rate adaptation, packet aggregation, channel quality monitoring, and the like. On top of signal manipulations, the wireless driver also embeds an IEEE 802.11 protocol stack with the associated IEEE defined management and control messaging. The wireless driver will hence inject a number of management and control packets in the data stream, making it difficult to analyze a link by transparently looking at the data frame exchange only.

**Figure 1** represents a system S comprising a plurality of wireless end-points 1-10 located for example in a same building B. Wireless links WL are established between these end-points 1-10. For example, wireless links are established between the end-points 1, 8, 9 and 10 and define a first set of links SWL1. Another set of wireless links SWL2 comprises the wireless links established between the end-points 2,5 and 6. A third set of wireless links SWL3 comprises wireless links established between the end-points 3, 4 and 7. In this example, the end-points 1, 2 and 3 are access points and the end-points 4, 5, 6, 7, 8, 9 and 10 are stations such as mobile phones, Set Top Boxes, etc. Those access points 1-3 may be controlled by a same Internet Service Provider (ISP) or by different ISPs.

Data such as data rate, physical layer data rate, an amount of spatial streams used, channel bandwidth, medium availability and Received Signal Strength Indicator (RSSI) from associated stations are collected for each wireless links and are transmitted to at least one remote communication device 11 belonging to the same Internet Service Provider controlling the wireless access points 1-3, or may be managed by a third party, and execute the method according to an embodiment of the invention.

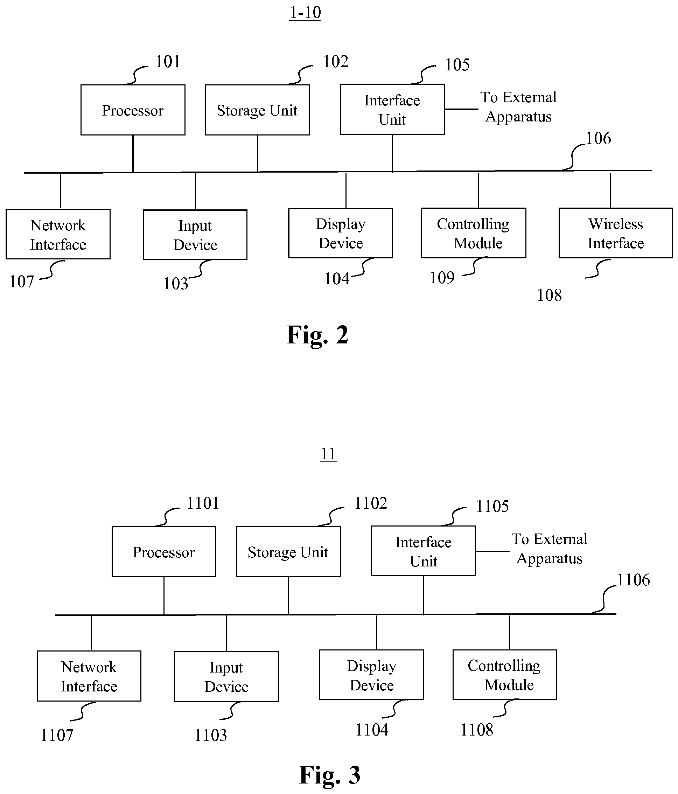

**Figure 2** represents a more detailed view of one of the end-points 1-10 according to an embodiment of the invention.

An end-point 1-10 may comprise at least one hardware processor 101, a storage unit 102, an input device 103, a display device 104, an interface unit 105, a network interface 107, at least one wireless interface 108 and a controlling module 109 which are connected by a bus 106. Of course, constituent elements of the end-point 1-10 may be connected by a connection other than a bus connection.

The processor 101 controls operations of the end-point 1-10. The storage unit 102 stores at least one program capable of monitoring and managing wireless communications to and from the end-point 1-10, to be executed by the processor 101, and various data, such as parameters used by computations performed by the processor 101, intermediate data of computations performed by the processor 101, and so on. The processor 101 may be formed by any known and suitable hardware, or software, or a combination of hardware and software. For example, the processor 101 may be formed by dedicated hardware such as a processing circuit, or by a programmable processing unit such as a CPU *(Central Processing Unit)* that executes a program stored in a memory thereof.

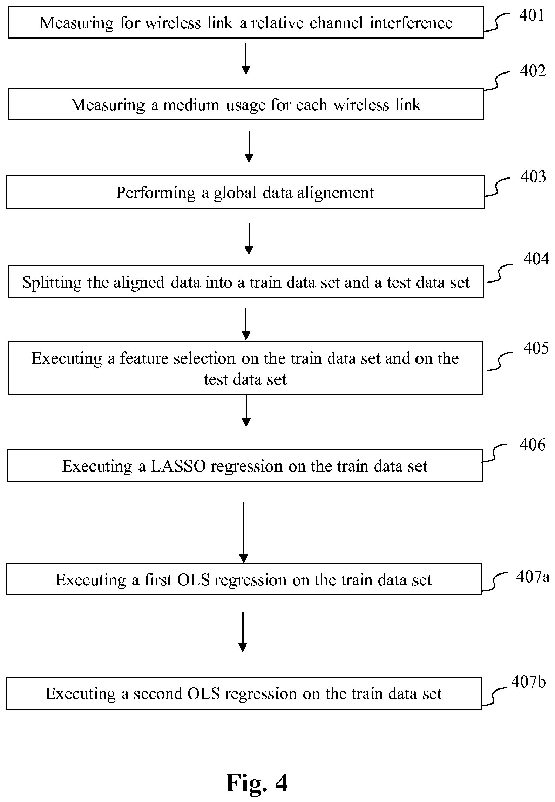

The storage unit 102 may be formed by any suitable storage or means capable of storing the program, data, or the like in a computer-readable manner. Examples of the storage unit 102 include non-transitory computer-readable storage media such as semiconductor memory devices, and magnetic, optical, or magneto-optical recording media loaded into a read and write unit. The program causes the processor 101 to perform a process according to an embodiment of the present disclosure as described hereinafter with reference to figure 4.

The input device 103 may be formed by a keyboard, a pointing device such as a mouse, or the like for use by the user to input commands, for example to make user's selections of parameters used for selecting the transmission interface to be used. The display device 104 may be formed by a display device to display, for example, a Graphical User Interface (GUI). The input device 103 and the display device 104 may be formed integrally by a touchscreen panel, for example.

The interface unit 105 provides an interface between the end-point 1-10 and an external apparatus. The interface unit 105 may be communicable with the external apparatus via cable or wireless communication. Such an external apparatus is for example a Set Top Box or a smartphone.

A network interface 107 provides a connection between the end-point 1-10 and the communication device 11 via a backbone network (not shown in the figures), such as the Internet. The network interface 107 may provide, depending on its nature, a wired or a wireless connection to the backbone network.

A wireless interface 108 provides a wireless connection, for example a Wi-Fi connection, between the end-point 1-10 and at least one station, e.g. a mobile phone (not shown on the figures), associated with said end-point 1-10.

A monitoring module 109 analyzes and evaluates the wireless link WL established between the end-point 1, 2, 3 and the other end-points 14-10. The information gathered by the monitoring module 109 may include data rate, physical layer data rate, amount of spatial streams used, channel bandwidth, medium availability and Received Signal Strength Indicator (RSSI) from associated stations as well as from neighboring wireless links WL, values representing an amount of performance lost due the interference relatively to a maximum performance of the wireless link under consideration called relative channel interference, or values that can be used to calculate the amount of performance loss, etc.

**Figure 3** is a schematic block diagram illustrating an example of a communication device 11 according to an embodiment of the invention.

The communication device 11 comprises at least one hardware processor 1101, a storage unit 1102, an input device 1103, a display device 1104, an interface unit 1105 and a network interface 1107 and a controlling module 1108 which are connected by a bus 1106. Of course, constituent elements of the communication device 11 may be connected by a connection other than a bus connection.

The processor 1101 controls operations of the communication device 11. The storage unit 1102 stores at least one program capable of being executed by the processor 1101, and various data, such as parameters used by computations performed by the processor 1101, intermediate data of computations performed by the processor 1101, and so on. The processor 1101 may be formed by any known and suitable hardware, or software, or a combination of hardware and software. For example, the processor 1101 may be formed by dedicated hardware such as a processing circuit, or by a programmable processing unit such as a CPU *(Central Processing Unit)* that executes a program stored in a memory thereof.

The storage unit 1102 may be formed by any suitable storage or means capable of storing the program, data, or the like in a computer-readable manner. Examples of the storage unit 1102 include non-transitory computer-readable storage media such as semiconductor memory devices, and magnetic, optical, or magneto-optical recording media loaded into a read and write unit. The program causes the processor 1101 to perform a process according to an embodiment of the present disclosure as described hereinafter with reference to figure 4.

The input device 1103 may be formed by a keyboard, a pointing device such as a mouse, or the like for use by the user to input commands, to make user's selections of parameters used for selecting the transmission interface to be used. The output device 1104 may be formed by a display device to display, for example, a Graphical User Interface (GUI). The input device 1103 and the output device 1104 may be formed integrally by a touchscreen panel, for example.

The interface unit 1105 provides an interface between the communication device 11 and an external apparatus. The interface unit 1105 may be communicable with the external apparatus via cable or wireless communication.

The network interface 1107 provides a connection between the communication device 11 and the end-points 1-10 through a backbone network (not shown in the figures), such as the Internet. The network interface 1107 may provide, depending on its nature, a wired or a wireless connection to the backbone network.

The controlling module 109 analyzes and evaluates the wireless links WL established between the end-points 1-3 and their respective end-points 4-10 as well as the interference that may be caused said wireless links WL on the shared wireless medium. The information gathered by the controlling module 109 may include achievable data rate, physical layer data rate, multiple spatial streams, channel bandwidth, medium availability and Received Signal Strength Indicator (RSSI), values representing an amount of performance lost due the interference relatively to a maximum performance of the wireless link under consideration, the medium usage, or values that can be used to calculate the amount of performance loss, etc.

**Figure 4** is a flow chart for explaining a process for identifying among the set of wireless links SWL1-SWL3 which one is causing interference on another set of wireless links SWL1-SWL3according to an embodiment of the invention. In the following description, a (set of) wireless link WL causing interference is called a bad neighbor.

In a step 401, each end-point 1-3 acting as an access point measures for its set of wireless links SWL1-SWL3 a value of the relative channel interference. Such a measurement is executed for example each 10 seconds. Those measurements are reported to the communication device 11. A set of wireless link may comprise only one wireless link.

In a step 402, each end-point 1-3 acting as an access point measures for its set of wireless links SWL1-SWL3 a value of the medium usage for the considered frequency channels. Such a measurement is executed for example each 2 seconds. Those measurements are reported to the communication device 11.

Step 401 and step 402 can be executed at the same time.

In an embodiment of the invention, only end-point 1-3 acting as an access point whose sets of wireless links are potentially suffering interference need to report values of the relative channel interference and only potentially bad neighbors need to report values of the wireless medium usage in order to reduce the amount of data to be processed to identify the set of wireless links causing the interference.

Data related to the measurements gathered by the communication device 11 during steps 401 and 402 are to be compared for identifying bad neighbors among the sets of wireless links SWL1-SWL3. As such, a global alignment of data is performed by the communication device 11 during a step 403. This is done, for example, by defining consecutive 10 second time intervals that are the same for every wireless link and allocating values of the measurements of the relative channel interference and the values of measurements of the wireless medium usage.to each of these time intervals in a weighted manner. The result of this data alignment is shown in Table 1 to Table 3.

Table represents the measurements of the relative channel interference for a given wireless link as well as their associated weights.

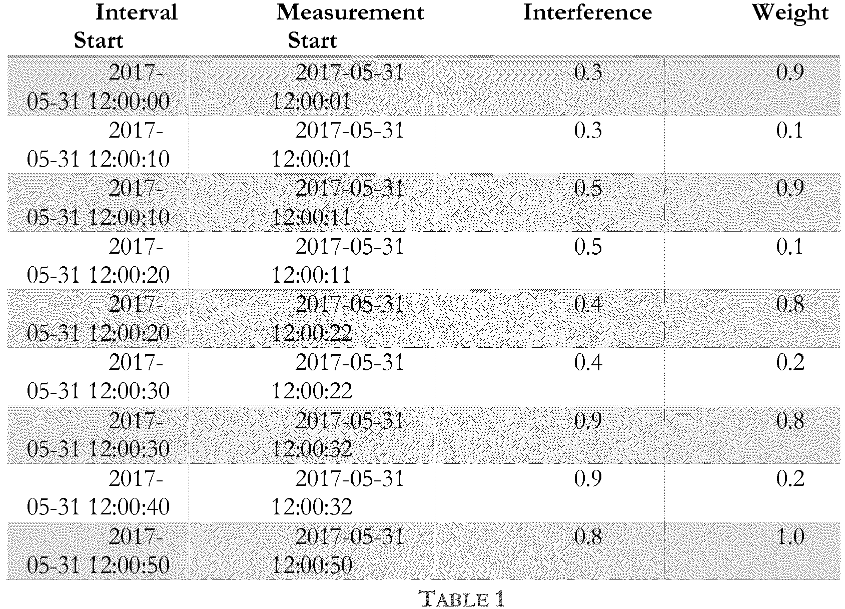

All the measurements gathered by the communication device 11 are assigned to one or two time intervals in a linearly weighted manner, based on how much of the considered measurement belongs to the time interval. If a frequency channel change occurs during a measurement, the measurement is dropped.

A minimum value for the sum of the weights associated to measurements allocated to a given time interval prevents slivers of data to represent a whole time interval. If the value of the sum of the weights associated to measurements allocated to a given time interval is below the minimum value, then the time interval is not considered for the identification of the set of wireless links SWL1-SWL3 causing the interference. In an embodiment of the invention, the minimum value is set to 0.5.

Then, the communication device 11 determines a weighted average of the measurements for each time interval as shown in Table 2. In Table 2, the time interval starting at 2017-05-31 12:00:40 is dropped since the total weight associated with the measurements in this time interval is less than 0.5.

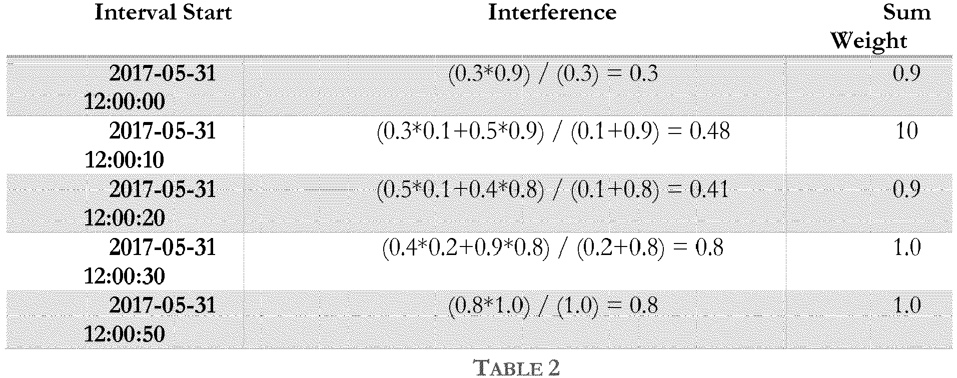

SELECT CASE WHEN l.interval IS NULL THEN r.interval else l.interval END AS interval,
   CASE WHEN l.radio_id IS NULL THEN r.radio_id else l.radio_id END AS radio_id,
   CASE WHEN l.channel IS NULL THEN r.channel else l.channel END AS channel,
   l.channel_interference,
   r.medium_usage
FROM aligned_interference_data AS l
OUTER JOIN aligned_usage_data AS r
ON (l.interval = r.interval AND l.radio_id = r.radio_id and I.channel = r.channel)

### EXAMPLE SQL CODE FOR JOIN

Then, the communication device brings together the metrics of the relative channel interference and the metrics of the medium usage for the same frequency channel in each time interval. An example of a SQL query executed by the communication device 11 to achieve this goal is shown below.

In order to identify the sets of wireless links SWL1-SWL3 causing interference on another wireless link, an analytical table is defined as follows:
- One row per time interval per frequency channel if the wireless medium usage on that combination is not 0 for the set of wireless links experiencing interference.
- One column containing a value of said interference
- One column per set of wireless links (AP in the table) considered a potential bad neighbor, containing the value of the wireless medium usage for the same time interval and same frequency channel.

Table 3 below is an example of the table generated by the communication device 11 in step 403 according to an embodiment of the invention.

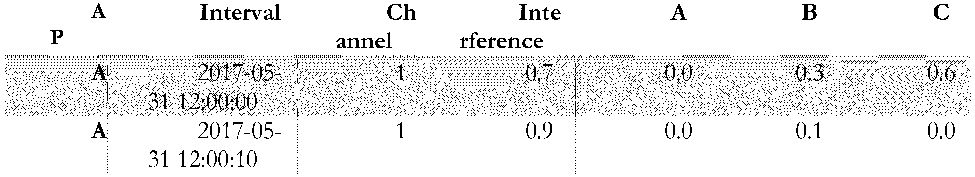

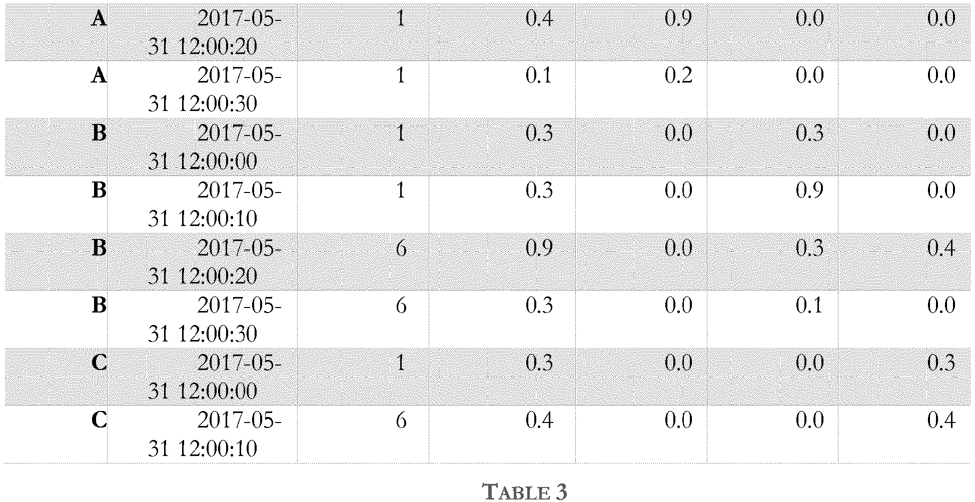

In an embodiment of the invention, the table 3 is split into a plurality of tables, e.g. one table per suffering set of wireless links, because the identification of the set of wireless links causing interference is executed over one potentially suffering set of wireless links SWL1-SWL3 at a time.

In a step 404, the communication device splits the dataset, i.e. the data stored in table 3 at random in a train set and test set. The used fractions are 90% of the data for the train set and 10%of the data for the test set, but other common values are also expected to result in decent performance. Splitting the data between a train set and a test set is motivated by the following reasons:
- the implementation of the invention does not use any hyperparameter optimization,
- doing so is computationally cheaper than other evaluation methods such as cross-validation.

After the splitting of the data in a train set and test set, the communication device 11 performs some basic operations on the data sets during a step 405 called feature selection. If the train set and the test sets together hold less than X rows, the analysis is stopped. This filtering is optional and can help reduce the risk of bogus results as well as speed up the wider analysis by not spending time on sets that are too small to be likely to turn up results. Experimentally, 1000 rows is found to be an acceptable lower limit to the numbers of rows.

If the relative channel interference values are always the same in the train set, the analysis is stopped because pattern finding is impossible in such a case.

Any wireless medium usage columns that always contains the same value in the train set, is dropped from both the train set and the test set.

Any wireless medium usage columns in the train set that never contains a value greater than or equal to a given value is dropped from both the train set and the test set. This is again a trade-off between speeding up the process on the one hand and maintain the accuracy on the other. In the implementation, the given value is left to 0, since most gets filtered out in the feature selection anyway.

In an embodiment of the invention, if the train set does not have more rows than medium usage columns after the above operations, the analysis is stopped. This to accommodate for some machine learning approaches which cannot cope with this situation. At the end of step 405, either:
- The analysis is halted and considered unfeasible on the current data.
- The train set and the test set still have the same number of rows, but may have shed some columns. The columns present in the train and the test set are the same ones.

Even after performing step 405 to reduce the number of sets of wireless links SWL1-SWL3 to consider in order to identify which wireless links are causing interference, may still remain a high dimensional problem since there may be hundreds of set of wireless links SWL1-SWL3 in very dense neighborhoods.

To prevent the high-dimensional nature of the problem to cause overfitting, the communication device 11 trains, in a step 406 a LASSO regression on the train set as follows:
- The value to predict is the relative channel interference,
- The inputs to use for a prediction are the values of medium usages of the frequency channels which are in the train set,
- a constant value may be used as additional input to use for a prediction,
- non-negative coefficients are forced.

The LASSO regression is trained through a least angle regression with the Bayes Information Criterion as metric to evaluate lambdas.

Any wireless medium usage input which value is not zero after the LASSO regression is being retained. The other inputs are dropped from both the train set and the test set.

In a step 407, the communication device 11 performs a separate OLS (ordinary least squares) regression on the data obtained after step 406. This two-step approach brings two benefits to the method according to an embodiment of the invention:
- it allows for non-penalized coefficients (i.e., no shrinking) whilst still delivering a sparse solution,
- the sets of wireless links SWL1-SWL3 potentially causing interference are evaluated by training modified models. By using OLS models, it possible to control which input is left out.

For a set of wireless links SWL1-SWL3 to be identified as being a bad neighbor, i.e. as causing interference on at least another set of wireless links SWL1-SWL3 for exchanging data with a station, two criteria has to be confirmed:
- Strong relation: does a change in the set of wireless links' wireless medium usage impacts on the set of wireless links experiencing interference?
- Important relation: does the relation as mentioned as the first criterium explains a non-trivial amount of the experienced interference.

In order to check those two criteria, the communication device 11 executes a performance analysis: how important is every input for explaining the interference.

Step 407 may be split into two sub-steps 407a and 407b. in sub-step 407a, the communication device 11 executes a first OLS regression on the train set, taking into account all the inputs, i.e. the values of the wireless medium usage, that got through the feature selection during step 405, plus an intercept. The performance of the model is measured by calculating a first R-Squared metric R² when predicting the performance on the test set. It can be seen as determining which proportion of the variance in the values of the relative channel interference can be explained by the model, making use of the values of the medium usages.

In the sub-step 407b, for every input except the intercept, the communication device 11 executes a second OLS regression the train set, omitting that input. A second R² metric is calculated every time on the test set.

A 'bad neighbor' score is determined by the communication device 11 for each set of wireless links SWL1-SWL3. This 'bad neighbor' score is the first R² minus the second R². This in effect gives an estimate on how much of the variance of the value of the interference is at least due to that specific set of wireless links.

The higher the 'bad neighbor' score, the more the set of wireless links causes interference on another set of wireless links.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

The following embodiments are also part of the present disclosure.
**Embodiment 1.** A computer implemented method for identifying, among a set of wireless links established between at least two wireless end-points, at least a first wireless link causing interferences on at least a second wireless link belonging to said set of wireless links, said method comprising:
   - Generating at least a set of data enabling the identification of the first wireless link by allocating measurements of an amount of performance loss of a wireless link due to interferences, and measurements of a use of a wireless medium by either said first wireless link or said second wireless link, to a given time interval of a set of time intervals in a weighted manner based on a time overlap between a time interval during which said measurements are performed and at least a given time interval of said set of time intervals,
   - identifying, based on said at least set of data, at least said first wireless link within said set of wireless links.
**Embodiment 2.** The method according to Embodiment 1 wherein a sum of the weights associated to measurements allocated to a given time interval is greater than or equal to a threshold.
**Embodiment 3.** The method according to Embodiment 1 wherein identifying the at least first wireless link based on the set of data comprises:
   - Splitting the data set into a training set and a test set,
   - Training a first performance analysis by running a least square regression on the metrics of a wireless medium usage of the train set, the performance being measured by calculating a R-Squared metrics on the train set while predicting a performance for the test set,
   - For at least one metric of a wireless medium usage performing a second performance analysis by training a least square regression on the metrics of a wireless medium usage of the train set minus the considered metric of a wireless medium usage, the performance being measured by calculating a R-Squared metrics on the test set minus the considered metric of a wireless medium usage while predicting a performance for the test set,
   - Determining a score for at least one wireless link belong to said set of wireless link wireless links by substracting the value of the R-Squared metrics obtained on the test set minus the considered metric of a wireless medium usage from the value of the R-Squared metrics obtained on the test set, the higher the score of a wireless link the more hindering the interference caused by said wireless link wireless link on another wireless link.
**Embodiment 4.** The method according to Embodiment 3 wherein, prior to perform the first performance analysis, a LASSO regression is performed on said train set.
**Embodiment 5.** A device capable of identifying, among a set of wireless links, at least a first wireless link causing interferences on at least a second wireless link belonging to said set of wireless links, said device comprising at least a hardware processor configured to:
   - generate at least a set of data enabling the identification of the first wireless link by allocating measurements wireless link of an amount of performance loss of a wireless link due to interferences, and measurements of a use of wireless medium by either said first wireless link or said second wireless link, to a given time interval of a set of time intervals in a weighted manner based on a time overlap between a time interval during which said measurements are performed and at least a given time interval of said set of time intervals,
   - identify, based on said at least set of data, at least said first wireless link within said set of wireless links.
**Embodiment 6.** The device according to Embodiment 5 wherein said hardware processor is further configured to:
   - Split the data set into a training set and a test set,
   - Perform a first performance analysis by training a least square regression on the metrics of a wireless medium usage of the train set, the performance being measured by calculating a R-Squared metrics on the test set while predicting a performance for the test set,

   - For at least one metric of a wireless medium usage, perform a second performance analysis by training a least square regression on the metrics of a wireless medium usage of the train set minus the considered metric of a wireless medium usage, the performance being measured by calculating a R-Squared metrics on the test set minus the considered metric of a wireless medium usage while predicting a performance for the test set,
   - Determine a score for at least one wireless link belong to said set of wireless links by substracting the value of the R-Squared metrics obtained on the test set minus the considered metric of a wireless medium usage from the value of the R-Squared metrics obtained on the test set, the higher the score of a wireless link the more hindering the interference caused by said wireless link on another wireless link.
**Embodiment 7.** The device according to Embodiment 6 wherein, prior to perform the first performance analysis, the hardware processor is configured to perform a LASSO regression on said train set.
**Embodiment 8.** A computer program characterized in that it comprises program code instructions for the implementation of the method according to Embodiment 1 when the program is executed by a processor.
**Embodiment 9.** A processor readable medium having stored therein instructions for causing a processor to perform the method according to Embodiment 1.
**Embodiment 10.** Non-transitory storage medium carrying instructions of program code for executing the method according to Embodiment 1, when said program is executed on a computing device.

## Claims

1. A device implemented method for identifying wireless link interferences, the method comprising:
- measuring (402) a plurality of wireless links and generating a data set based on the measuring, wherein the data set comprises a plurality of metrics of a wireless medium usage;
- splitting (404) the data set into a training data set and a test data set;
- training (407a) a first prediction model by running a regression on the plurality of metrics of the wireless medium usage of the training data set including an intercept;
- calculating a first R-Squared metric of the first prediction model using the test data set;
- training (407b) a second prediction model by running a regression on the plurality of metrics of the wireless medium usage of the training data set excluding the intercept;
- calculating a second R-Squared metric of the second prediction model using the test data set;
- determining a score for each wireless if the plurality of wireless links by subtracting the second R-Squared metric from the first R-Squared metric; and
- identifying, based on the determined scores, at least a first wireless link within the plurality of wireless links that is causing interference.

2. The method of claim 1, wherein identifying includes determining that the first wireless link causes the most interfere of all wireless link interreferences based on the first wireless link having a highest score of the determined scores.

3. The method of claim 1, wherein the regression is ordinary least square or lasso.

4. The method of claim 1, wherein the plurality of metrics of the wireless medium usage comprises data rate, physical layer data rate, a number of spatial streams used, channel bandwidth, medium availability and Received Signal Strength Indicator (RSSI).

5. The method of claim 1, wherein the regression is ordinary least square, LASSO, least angle, or Bayesian.

6. The method of claim 1, wherein any data that is identical between the training data set and the test data set is not used.

7. The method of claim 1, wherein any zero value in the training data set or the test data set is not used.

8. A device (11), the device comprising:
- means for measuring a plurality of wireless links and generating a data set based on the measuring, wherein the data set comprises a plurality of metrics of a wireless medium usage;
- means for splitting the data set into a training data set and a test data set;
- means for training a first prediction model by running a regression on the plurality of metrics of the wireless medium usage of the training data set including an intercept;
- means for calculating a first R-Squared metric of the first prediction model using the test data set;
- means for training a second prediction model by running a regression on the plurality of metrics of the wireless medium usage of the training data set excluding the intercept;
- means for calculating a second R-Squared metric of the second prediction model using the test data set;
- means for determining a score for each wireless if the plurality of wireless links by subtracting the second R-Squared metric from the first R-Squared metric; and
- means for identifying, based on the determined scores, at least a first wireless link within the plurality of wireless links that is causing interference.

9. The device of claim 8, wherein identifying includes determining that the first wireless link causes the most interfere of all wireless link interreferences based on the first wireless link having a highest score of the determined scores.

10. The device of claim 8, wherein the regression is ordinary least square or lasso.

11. The device of claim 8, wherein the plurality of metrics of the wireless medium usage comprises data rate, physical layer data rate, a number of spatial streams used, channel bandwidth, medium availability and Received Signal Strength Indicator (RSSI).

12. The device of claim 8, wherein the regression is ordinary least square, LASSO, least angle, or Bayesian.

13. The device of claim 8, wherein any data that is identical between the training data set and the test data set is not used.

14. The device of claim 8, wherein any zero value in the training data set or the test data set is not used.
